# EUROPEAN PATENT SPECIFICATION

(11) **EP 0 346 028 B1**
(45) Date of publication and mention of the grant of the patent: **05.01.1994**
(21) Application number: 89305616.8
(22) Date of filing: 02.06.1989
(51) Int. Cl.: H04N 3/12

(54) **Video signal display apparatus**
Videosignalanzeigegerät
Appareil d'affichage de signal vidéo

(30) Priority: 06.06.1988 JP 139133/88
(43) Date of publication of application: 13.12.1989
(73) Proprietor: SONY CORPORATION, Tokyo 141 (JP)
(72) Inventor: Shirochi, Yoshiki Patents Division, Shinagawa-ku Tokyo 141 (JP); Takaoka, Hirokazu Patents Division, Shinagawa-ku Tokyo 141 (JP); Hiraki, Hiroshi Patents Division, Shinagawa-ku Tokyo 141 (JP)
(74) Representative: Pilch, Adam John Michael

(56) References cited:
- FR-A- 2 535 562
- GB-A- 2 162 674
- US-A- 4 500 930
- PATENT ABSTRACTS OF JAPAN vol. 12, no. 101 (E-595)(2948), 2 April 1988; & JP-A-62 232279 (CITIZEN WATCH) 12-10-1987

## Description

This invention relates to video signal display apparatus, and in particular to such display apparatus having a plurality of display elements such as liquid crystals or fluorescent phosphor tubes which are arranged in a two-dimensional manner or in an X-Y matrix shape.

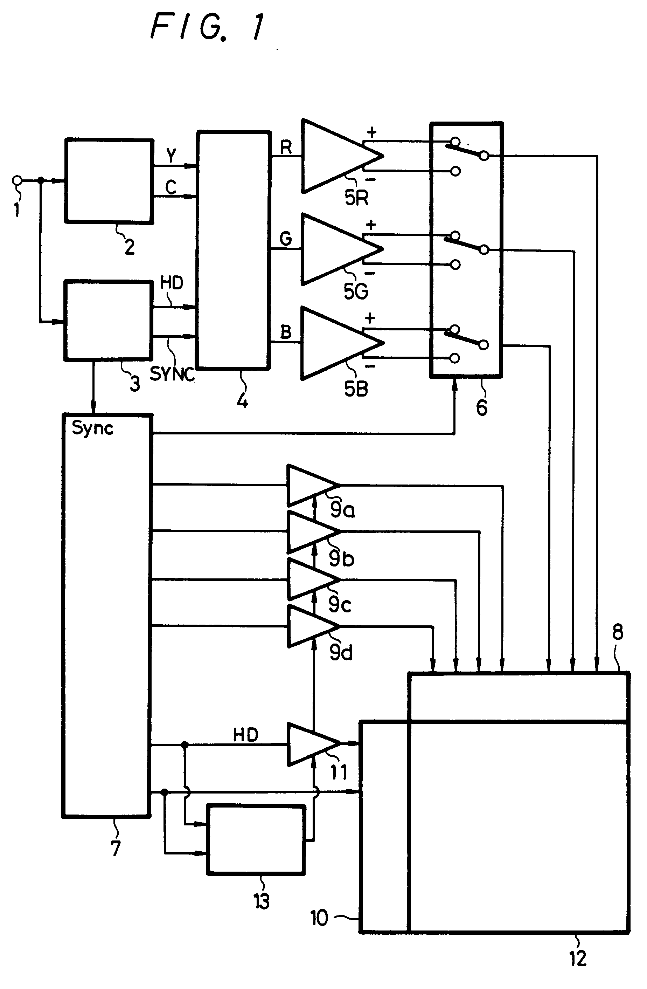

Figure 1 of the accompanying drawings shows a previously-proposed display apparatus utilising, for example, a liquid crystal display panel.

Referring to Figure 1, a video signal applied to a video input terminal 1 is supplied to a luminance signal and chroma signal (Y/C) separating circuit 2 which processes the video signal to provide a luminance signal Y and a chroma signal C. The video signal applied to the input terminal 1 is also supplied to a synchronising signal separating circuit 3, from which there are derived a horizontal synchronising signal HD and a synchronising signal SYNC. The luminance signal Y, the chrominance signal C, the horizontal synchronising signal HD and the synchronising signal SYNC are all supplied to an RGB decoder 4 which generates red, green and blue primary colour signals R, G and B. The red, green and blue primary colour signals R, G and B are respectively supplied to amplifiers 5R, 5G and 5B which generate signals of positive and negative polarities. These signals of positive and negative polarities are supplied to an alternate current drive switch 6.

A composite synchronising signal from the separating circuit 3 is supplied to a display panel control signal generating circuit 7 which supplies a field pulse of alternate polarity at every field to the switch 6. As a result, the switch 6 generates red, green and blue signals R, G and B which are alternate current signals at every field. The red, green and blue signals R, G and B from the switch 6 are supplied to a data driver 8.

The data driver 8 is also supplied with a picture element clock signal, a reset signal, a transfer timing signal and an output timing signal, all from the generating circuit 7, in synchronism with the horizontal synchronising signal. These signals are supplied through respective gate circuits 9a, 9b, 9c and 9d to the data driver 8. The generating circuit 7 supplies a reset signal synchronised with a vertical synchronising signal to a scan driver 10, and also supplies a horizontal synchronising signal HD through a gate circuit 11 to the scan driver 10. The data driver 8 and the scan driver 10 drive a display panel 12, whereby the video signal applied to the terminal 1 is sampled at every pixel by the data driver 8 and is supplied to the display panel 12 in response to the transfer timing signal and to the output timing signal, while the scan driver 10 sequentially selects the respective horizontal scanning lines, thereby displaying a video image on the display panel 12.

In the display apparatus shown in Figure 1, it has been proposed that the display panel 12 might have 512 display scanning lines which correspond to an effective picture area according to, for example, the NTSC system.

It has also been proposed to produce this kind of display apparatus arranged to display a video signal according to the CCIR system. The effective picture area according to the CCIR system has more than 600 display scanning lines, and in the manufacturing process of this kind of display panel, the manufacturing yield is not satisfactory. In addition, the demand for display panels according to the CCIR system is expected to be very small compared with that for display panels according to the NTSC system.

In order to solve this problem, it has been proposed that a video image according to the CCIR system be displayed on a display panel of the NTSC system. According to this proposal, the ratio between the CCIR and NTSC horizontal scanning lines is about 6 : 5, whereby the video image according to the CCIR system can be displayed on the display panel according to the NTSC system by discarding the horizontal scanning lines of the video image according to the CCIR system in the ratio of 6 : 1, in other words discarding every sixth line.

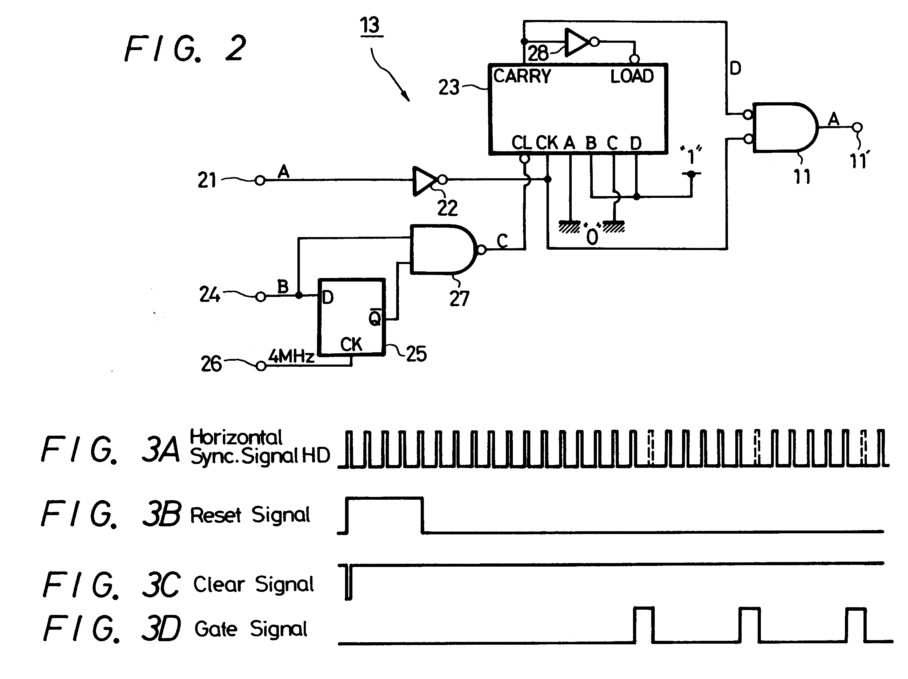

In order to implement this proposal, as shown in Figure 1, the generating circuit 7 supplies the horizontal synchronising signal HD and the reset signal synchronised with the vertical synchronising signal to a counter 13, and the output signal from the counter 13 is used to control the gate circuits 9a to 9d and the gate circuit 11. The counter 13 effects the required removal of the horizontal scanning lines, and will be described more fully with reference to a block diagram shown in Figure 2 of the accompanying drawings, waveforms of signals in Figure 2 being shown in Figures 3A to 3D of the accompanying drawings. In Figure 2, like parts corresponding to those of Figure 1 are marked with the same references and therefore will not be described in detail.

Referring to Figure 2, the horizontal synchronising signal HD from the generating circuit 7 (Figure 1) is supplied to a terminal 21. The signal from the terminal 21 is supplied through an inverter 22 to a clock input terminal CK of a 16-scale counter 23. The waveform of the signal applied to the terminal 21 is shown in Figure 3A. The reset signal synchronised with the vertical synchronising signal is supplied to a terminal 24 from the generating circuit 7 (shown in Figure 1), and the reset signal from the terminal 24 is fed to a D input terminal of a D flip-flop 25. The waveform of the reset signal is illustrated in Figure 3B. Also, a clock signal having a frequency of, for example, 4 MHz applied to a terminal 26 is supplied to a clock input terminal CK of the D flip-flop 25. The output signal developed at the Q̅ output terminal of the D flip-flop 25 and the reset signal from the terminal 24 are supplied to a NAND circuit 27. The output (whose waveform is illustrated in Figure 3C) from the NAND circuit 27 is fed to the clear input terminal CL of the counter 23. At data input terminals A to D of the counter 23, a signal "0" (1 ow level) is supplied to the data input terminal A (least significant bit) and to the data input terminal C, whereas a signal "1" (high level) is supplied to the data input terminal B and to the data input terminal D (most significant bit). Data representing [10] (decimal value) is therefore supplied to the counter 23. The carry output of the counter 23 is supplied through an inverter 28 to the load input terminal LOAD of the counter 23.

According to the circuit shown in Figure 2, when the horizontal synchronising signal HD shown in Figure 3A is supplied to the terminal 21 and the reset signal shown in Figure 38 is supplied to the terminal 24, the NAND circuit 27 derives the clear signal whose waveform is shown in Figure 3C. The signal from the NAND circuit 27 is supplied to the clear terminal CL of the counter 23, whereby the counter 23 derives a carry output when counting the horizontal synchronising signal HD from the terminal 21 sixteen times after having received the signal at its clear input terminal CL. Further, when this carry output is supplied to the load input terminal LOAD of the counter 23, the data representing [10] is loaded into the counter 23. Thereafter, the counter 23 generates the carry output each time it counts the signal from the terminal 21 six times as shown in Figure 3D.

When the carry output and the signal from the terminal 21 are supplied to the gate circuit (NOR circuit) 11, the NOR circuit 11 generates at its output terminal 11′ the horizontal synchronising signal HD whose pulse is removed every other six pulses as shown by a phantom outline in Figure 3A.

The thus-processed horizontal synchronising signal HD is supplied to the scan driver 10 (Figure 1), whereby during the period of the removed horizontal synchronising signal, the horizontal scanning position of the display panel 12 is not advanced and the signals from the data driver 8 are ignored, thus resulting in the pulse of the horizontal synchronising signal being removed. In that event, the supply of the clock signal, the reset signal, the transfer timing signal and the output timing signal from the generating circuit 7 to the data driver 8 is stopped by the gate circuits 9a to 9d, whereby a disturbance can be prevented from being caused by an undesired signal.

In this way, the video image according to the CCIR system can be displayed on the NTSC display panel by removing the scanning lines in the ratio of 6 : 1.

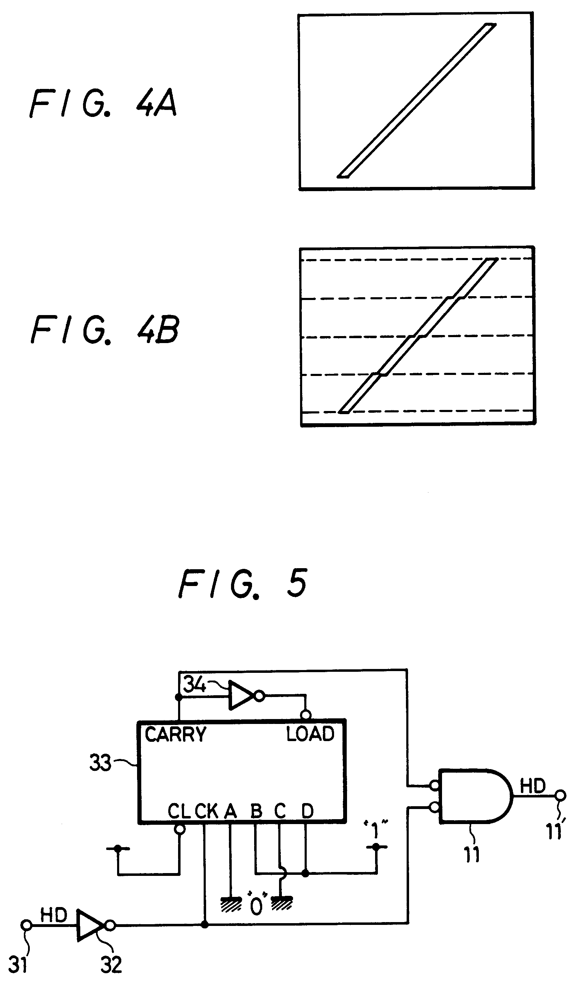

In the case of the above-described display apparatus, the position of the horizontal scanning line at which the pulse is removed is fixed as the position of every sixth horizontal scanning line on the basis of, for example, the sixteenth horizontal scanning line from the vertical synchronising signal (the reset signal). If a video image as shown in Figure 4A of the accompanying drawings is to be displayed, then a picture processed by the removal of the horizontal scanning lines appears as shown in Figure 4B of the accompanying drawings, in which the oblique straight line shown in Figure 4A is distorted in a stepwise fashion as shown in Figure 4B. Further, since the positions of the horizontal scanning lines which are removed are fixed as described above, these stepwise-distorted portions are very conspicuous.

Furthermore, if a relatively still picture is zoomed or if it is moved upwards or downwards, the zooming speed or the moving speed of the picture is varied at the positions at which the horizontal scanning line has been removed, thus resulting in flicker being produced at the boundary portion of the picture, and similar undesirable effects. This flicker degrades the image quality considerably.

US Patent No. US-A-4 500 930 discloses a television standards converter which uses a video tape recorder (VTR). The capstan speed of the VTR is that of the video signal recorded on the tape (namely at the original standard) whereas the drum speed is that of the new standard to which the video signal is being converted. Thus the video signal reproduced by the VTR has the original line rate but the new (converted) field rate. A line rate converter converts the reproduced signal to the new line rate, thereby completing standards conversion of the video signal ready for display according to the new standard.

In accordance with the present invention there is provided apparatus for displaying a video signal corresponding to a first television standard, said apparatus having a plurality of display elements disposed in an X-Y matrix shape, said apparatus comprising:
separator means for separating a sync signal from an input video signal;
generator means for generating a control signal in response to said sync signal;
drive means for driving said display elements in response to said video signal and said control signal; and
converter means for changing the number of scanning lines in the input video signal when said input video signal is of a second standard different from said first standard, said converter means deleting or adding lines from or to said input video signal at times which differ from picture to picture.

A preferred embodiment of the present invention described hereinafter provides an improved display apparatus that can overcome the above-mentioned defects inherent in the previously-proposed apparatus of Figures 1 and 2.

The preferred display apparatus can prevent the scanning line-converted position from becoming conspicuous, and can therefore display video images satisfactorily.

The invention will now be described by way of example with reference to the accompanying drawings, throughout which like parts are referred to by like references, and in which:
Figure 1 is a block diagram showing an example of a previously-proposed display apparatus;
Figure 2 is a block diagram showing an example of a counter used in the previously-proposed display apparatus shown in Figure 1;
Figures 3A to 3D are waveform diagrams used to explain the operation of the counter shown in Figure 2;
Figures 4A and 4B are schematic representations of pictures used to explain the defects of the previously-proposed display apparatus;
Figure 5 is a block diagram showing a main portion of a display apparatus according to an embodiment of the present invention;
Figure 6 is a block diagram showing a main portion of a display apparatus according to another embodiment of the present invention; and
Figures 7A to 7G are waveform diagrams used to explain the operation of the display apparatus shown in Figure 6.

Figure 5 illustrates a main portion of display apparatus embodying the present invention. In Figure 5, like parts corresponding to those of Figures 1 and 2 are marked with the same references.

Referring to Figure 5, it will be seen that the horizontal synchronising signal HD from the generating circuit 7 (see Figure 1) is supplied to a terminal 31. The horizontal synchronising signal HD applied to the terminal 31 is supplied through an inverter 32 to a clock input terminal CK of a 16-scale counter 33. At data input terminals A to D of the counter 33, data representing "0" (low level) is supplied to the data input terminals A and C, whereas data representing "1" (high level) is supplied to the data input terminals B and D so that the value [10] is supplied to the counter 33 as the input data. Further, data representing "1" is fed to the clear input terminal CL of the counter 33. The carry output of the counter 33 is supplied through an inverter 34 to the load input terminal LOAD of the counter 33.

It is to be noted that the present embodiment shown in Figure 5 is different from the previously-proposed circuit shown in Figure 2 only in that the system operable by the reset signal (applied to the terminal 24 in Figure 2) is omitted, and that data representing "1" is supplied to the clear terminal CL of the counter 23.

According to the circuit shown in Figure 5, the counter 33 generates a carry output each time it counts six times the horizontal synchronising signal HD from the terminal 31 in the stationary state. When the carry output and the horizontal synchronising signal HD from the terminal 31 are supplied to the gate circuit (NOR circuit 11), the NOR circuit 11 generates at its output terminal 11′ a horizontal synchronising signal HD in which five sampling pulses are selected and one sampling pulse is rejected. The resultant horizontal synchronising signal HD is supplied to the scan driver 10 (see Figure 1) whereby during the period of the horizontal synchronising signal HD, the horizontal scanning position on the display panel 12 (Figure 1) is not advanced and the signal fed from the data driver 8 (Figure 1) during this period is inhibited; thus the scanning lines are selectively removed. Simultaneously, the supply of the clock signal, the reset signal, the transfer timing signal and the output timing signal from the generating circuit 7 to the data driver 8 is stopped by the gate circuits 9a to 9d in Figure 1.

The CCIR system, for example, employs 625 horizontal scanning lines per frame, and one line is left as a remainder when 625 is divided by six, whereby the position in which the horizontal scanning line is converted is sequentially changed with every frame.

According to the circuit shown in Figure 5, the position at which the horizontal scanning line is converted is varied with every frame so that the conversion position is not conspicuous. Hence, the video image can be displayed faithfully.

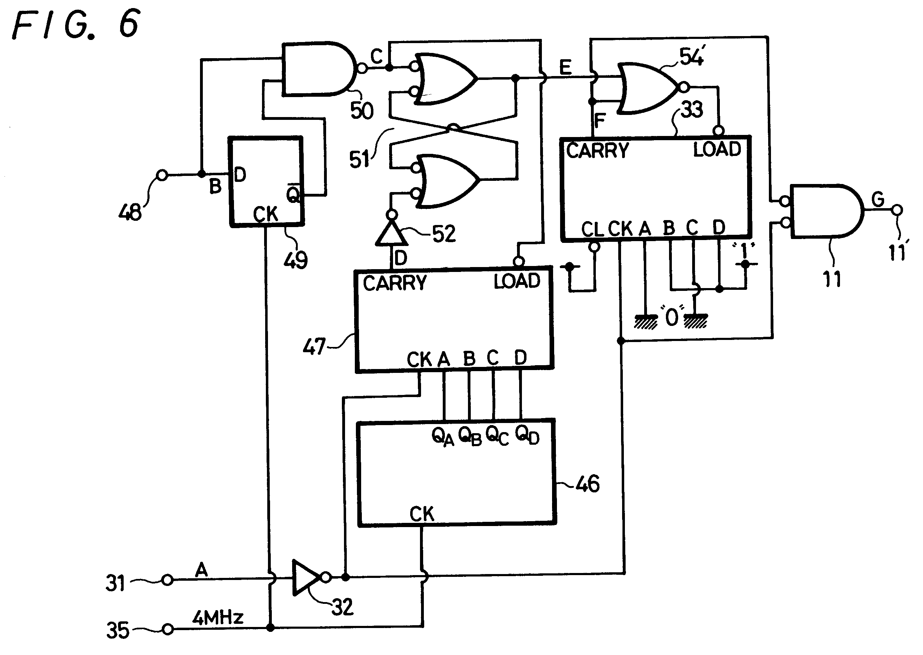

Figure 6 illustrates a main portion of another embodiment of display apparatus. In Figure 6, like parts corresponding to those of Figure 5 are marked with the same references and will not be further described.

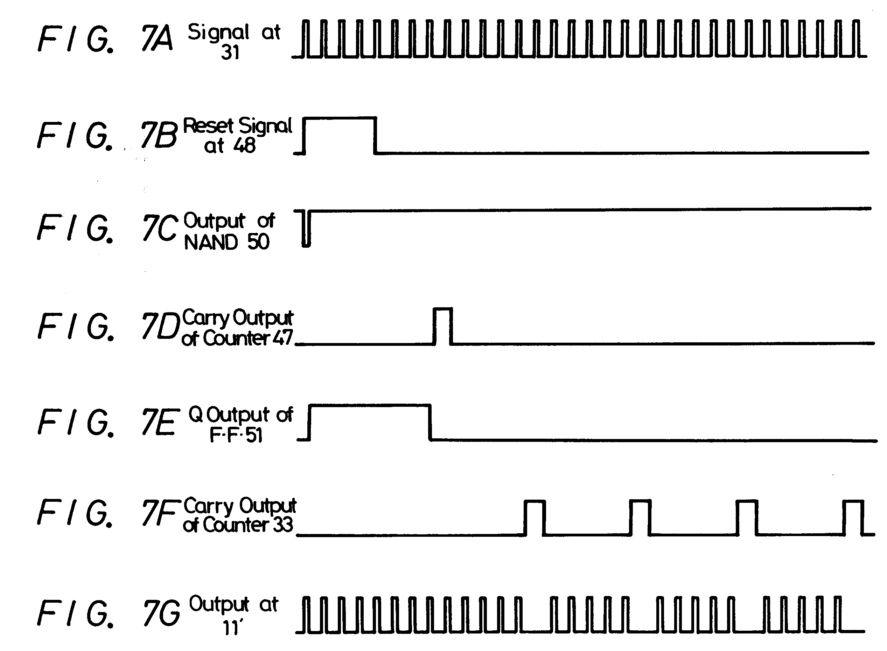

Referring to Figure 6, the signal applied to the input terminal 31 is supplied through the inverter 32 to the clock terminal CK of the counter 33. The waveform of this signal applied to the input terminal 31 is shown in Figure 7A. A clock signal having a frequency of, for example, 4 MHz from a terminal 35 is supplied to a clock terminal CK of a counter 46. The count outputs QA, QB, QC and QD of the counter 46 are supplied to data input terminals A to D of a further counter 47. The signal from the inverter 32 is supplied to the clock input terminal CK of the counter 47.

The reset signal synchronised with the vertical synchronising signal from the generating circuit 7 (see Figure 1) is supplied to a terminal 48. The signal from the terminal 48 is supplied to a D input terminal of a D flip-flop 49. The waveform of the reset signal is shown in Figure 7B. The D flip-flop 49 is also supplied at its clock input terminal CK with the signal at 4 MHz from the terminal 35. The Q̅ output of the D flip-flop 49 and the reset signal applied to the terminal 48 are supplied to a NAND circuit 50. The output of the NAND circuit 50 is supplied to the load input terminal LOAD of the counter 47 and is also fed to the set input terminal of the flip-flop 51. The waveform of the output of the NAND circuit 50 is shown in Figure 7C. The carry output from the counter 47 is supplied through an inverter 52 to the reset input terminal of the flip-flop 51. The waveform of the carry output from the counter 47 is represented in Figure 7D. The Q output of the flip-flop 51 and the carry output of the counter 33 are mixed by a NOR circuit 54′, and the mixed output from the NOR circuit 54′ is fed to the load input terminal LOAD of the counter 33.

In accordance with the circuit of Figure 6, when the signal shown in Figure 7A is supplied to the terminal 31 and the reset signal shown in Figure 7B is supplied to the terminal 48, the NAND circuit 50 derives the signal whose waveform is shown in Figure 7C. When the signal from the NAND circuit 50 is supplied to the load input terminal LOAD of the counter 47, the count value of the counter 46 at that time is loaded into the counter 47. The count value to be loaded into the counter 47 is randomly determined by the counter 46. Thus, the counter 47 derives a carry output whose waveform is illustrated in Figure 7D. This carry output is supplied through the inverter 52 to the reset terminal of the flip-flop 51 so that the flip-flop 51 is reset to generate the Q output whose waveform is shown in Figure 7E.

More specifically, in accordance with the circuit shown in Figure 6, the trailing edge of the Q output from the flip-flop 51 is determined by the value to be loaded into the counter 47, and this load value is randomly determined by the counter 46. The Q output of the flip-flop 51 is supplied through the NOR circuit 54′ to the load input terminal LOAD of the counter 33, whereby data representing [10] is loaded into the counter 33. Further, the carry output of the counter 33 is supplied to its load input terminal LOAD so that the counter 33 generates a carry output shown in Figure 7F each time it counts the signal from the terminal 31 six times.

Thus, when the carry output and the signal from the terminal 31 are supplied to the gate circuit (NOR circuit) 11, the NOR circuit 11 generates at its output terminal 11′ a horizontal synchronising signal HD in which five pulses are selected and one pulse is removed as shown in Figure 7G.

In this case, the timing of the first loading operation executed at every vertical synchronising signal in the counter 33 is randomly determined by the count value of the counter 46, whereby the timing is randomly varied in each frame.

The above techniques can also be applied to the case when, in scanning line conversion requiring the insertion of a scanning line, a suitable insertion timing is determined.

According to embodiments of the present invention, as described above, since the position of the horizontal scanning line conversion is varied with every frame, the scanning line conversion position can be prevented from becoming conspicuous and a faithful display can always be effected.

## Claims

1. Apparatus for displaying a video signal corresponding to a first television standard, said apparatus having a plurality of display elements disposed in an X-Y matrix shape, said apparatus comprising:
separator means (3) for separating a sync signal from an input video signal;
generator means (7) for generating a control signal in response to said sync signal;
drive means (8) for driving said display elements in response to said video signal and said control signal; and
converter means (13) for changing the number of scanning lines in the input video signal when said input video signal is of a second standard different from said first standard, said converter means (13) deleting or adding lines from or to said input video signal at times which differ from picture to picture.

2. Apparatus according to claim 1, wherein said converter means (13) is operable to shift the timing of deleted or added lines by one scanning line in response to each picture change.

3. Apparatus according to claim 1, wherein said converter means (13) is operable to change the timing of deleted or added lines arbitrarily in each picture.

4. Apparatus according to claim 1, claim 2 or claim 3, wherein said scanning lines of the second standard are omitted at every one of a predetermined number of lines when the scanning lines of the second standard are greater in number than the scanning lines of the first standard.

5. Apparatus according to claim 4, wherein the predetermined number of said lines is six.

6. Apparatus according to any one of the preceding claims, wherein said first standard is NTSC and said second standard is a CCIR standard.

7. Apparatus according to any one of the preceding claims, wherein said display elements are liquid crystal panels.

## Patentansprüche

1. Gerät zur Anzeige eines einer ersten Fernsehnorm entsprechenden Videosignals mit einer Mehrzahl von in einer X-Y-Matrix angeordneten Anzeigeelementen,
wobei das Gerät aufweist:
eine Trenneinrichtung (3) zum Abtrennen eines Synchronisiersignals aus einem Eingangs-Videosignal,
eine Generatoreinrichtung (7) zur Erzeugung eines Steuersignals in Abhängigkeit von dem Synchronisiersignal,
eine Treibereinrichtung (8) zur Ansteuerung der Anzeigeelemente in Abhängigkeit von dem Videosignal und dem Steuersignal und
eine Wandlereinrichtung (13) zur Änderung der Zahl der Abtastzeilen in dem Eingangs-Videosignal, wenn dieses einer von der ersten Fernsehnorm abweichenden zweiten Fernsehnorm entspricht, wobei diese Wandlereinrichtung (13) in von Bild zu Bild differierenden Zeiten aus dem Eingangs-Videosignal Zeilen ausläßt oder dem Eingangs-Videosignal Zeilen hinzufügt.

2. Gerät nach Anspruch 1, bei dem die Wandlereinrichtung (13) die Zeitlage von ausgelassenen oder zugefügten Zeilen in Abhängigkeit von jedem Bildwechsel verschiebt.

3. Gerät nach Anspruch 1, bei dem die Wandlereinrichtung (13) die Zeitlage von ausgelassenen oder zugefügten Zeilen in jedem Bild willkürlich ändert.

4. Gerät nach Anspruch 1, 2 oder 3, bei dem die genannten Abtastzeilen bei der zweiten Fernsehnorm bei jeweils einer aus einer vorbestimmten Anzahl von Zeilen ausgelassen werden, wenn die Zahl der Abtastzeilen bei der zweiten Fernsehnorm größer ist als bei der ersten Fernsehnorm.

5. Gerät nach Anspruch 4, bei dem die vorbestimmte Anzahl gleich sechs ist.

6. Gerät nach einem der vorhergehenden Ansprüche, bei dem die erste Fernsehnorm die NTSC-Norm und die zweite Fernsehnorm eine CCIR-Norm ist.

7. Gerät nach einem der vorhergehenden Ansprüche, bei dem die Anzeigeelemente Flüssigkristall-Panele sind.

## Revendications

1. Appareil permettant de visualiser un signal vidéo qui correspond à une première norme de télévision, ledit appareil possédant plusieurs éléments de visualisation disposés suivant une forme de matrice X-Y, ledit appareil comprenant :
un moyen séparateur (3) servant à séparer un signal de synchronisation d'un signal vidéo d'entrée ;
un moyen genérateur (7) servant à produire un signal de commande en réponse audit signal de synchronisation ;
un moyen d'excitation (8) servant à exciter lesdits éléments de visualisation en réponse audit signal vidéo et audit signal de commande : et
un moyen convertisseur (13) servant à modifier le nombre de lignes de balayage contenues dans le signal vidéo d'entrée lorsque ledit signal vidéo d'entrée présente une deuxième norme différente de ladite première norme, ledit moyen convertisseur (13) supprimant ou ajoutant des lignes audit signal vidéo d'entrée à des moments qui diffèrent d'une image à l'autre.

2. Appareil selon la revendication 1, où ledit moyen convertisseur (13) peut avoir pour fonction de décaler d'une ligne de balayage, en réponse à chaque changement d'image, le positionnement temporel de lignes supprimées ou ajouées.

3. Appareil selon la revendication 1, où ledit moyen convertisseur (13) peut avoir pour fonction de changer arbitrairement dans chaque image, le positionnement temporel de lignes supprimées ou ajoutées.

4. Appareil selon la revendication 1, 2 ou 3, où lesdites lignes de balayage de la deuxième norme sont omises toutes les n lignes, où n est un nombre prédéterminé de lignes, lorsque les lignes de balayage de la deuxième norme sont en plus grand nombre que les lignes de balayage de la première norme.

5. Appareil selon la revendication 4, où le nombre prédéterminé desdites lignes est égal à six.

6. Appareil selon l'une quelconque des revendications précédentes, où ladite première norme est la norme NTSC (National Television System Commitee) et ladite deuxème norme est une norme CCIR (Comité Consultatif International des Radiocommunications).

7. Appareil selon l'une quelconque des revendications précédentes, où lesdits éléments de visualisation sont des panneaux à cristaux liquides.
